# EUROPÄISCHE PATENTSCHRIFT

(11) **EP 1 476 691 B1**
(45) Veröffentlichungstag und Bekanntmachung des Hinweises auf die Patenterteilung: **11.05.2005**
(21) Anmeldenummer: 03729821.3
(22) Anmeldetag: 09.04.2003
(51) Int. Cl.: F16L 37/12, C23C 22/72, F01N 7/18, F01N 7/16

(54) **Verbindungsvorrichtung zweier heisser Rohrflansche von Abgasrohren eines Verbrennungsmotors**
Connecting device of two hot pipe flanges of the exhaust pipes of an internal combustion engine
Dispositif de raccordement de deux brides chaudes des tuyaux d'échappement d'un moteur à combustion interne

(30) Priorität: 10.04.2002 DE 10215585
(43) Veröffentlichungstag der Anmeldung: 17.11.2004
(73) Patentinhaber: Christian Bauer GmbH & Co., 73642 Welzheim (DE)
(72) Erfinder: BRÜCKNER, Lothar, 71229 Leonberg (DE); BUCHHAGEN, Peter, 73642 Welzheim (DE)
(74) Vertreter: Pfusch, Volker
(86) Internationale Anmeldenummer: PCT/DE2003/001153
(87) Internationale Veröffentlichungsnummer: WO 2003/087648

(56) Entgegenhaltungen:
- DE-C- 10 015 028
- GB-A- 592 945
- US-A- 3 930 674
- WIEDERHOLT W.: "CHEMISCHE OBERFLACHENBEHANDLUNG VON METALLEN ZUM " 1963 , EUGEN G. LEUZE , SALGAU (WÜRTT) XP002254646 Seite 66, Zeile 1 -Seite 68, Zeile 14 Seite 71, Zeile 30 -Seite 73, Zeile 18
- DATABASE WPI Derwent Publications Ltd., London, GB; AN 1977-56370 Y[32] "Steel spring of high durability and corrosion resistance - manufactured by descaling, annealing and ionically nitriding" & JP 52 076234 A ((DIES) DIESEL KIKI CO LTD) 27. Juni 1977 (1977-06-27)

## Beschreibung

Die Erfindung betrifft eine Verbindungsvorrichtung zweier heißer Rohrflansche von Abgasrohren eines Verbrennungsmotors mit einer die Rohrflansche zwischen sich einspannenden, U-förmig ausgebildeten Federklammer aus Federstahl entsprechend dem Merkmal (a) des Patentanspruchs 1.

Bekannte, gattungsgemäße federnde Verbindungselemente sind beispielsweise Federklammern aus Federstahl nach EP 0 993 577 B1 oder DE 100 150 28 C1 zur Verbindung von miteinander zu verbindenden Bereichen aus Abgasanlagen von Verbrennungsmotoren in Kraftfahrzeugen. Die hierfür bisher in der Praxis verwendeten Werkstoffe unterscheiden sich in der Warmfestigkeit, Korrosionsbeständigkeit sowie den Herstellungskosten. Im Hinblick auf die Anforderungen, die an eine speziell U-förmig ausgebildete Federklammer gestellt werden, nämlich kostengünstige Herstellbarkeit, Korrosionsfestigkeit und Stabilität gegen Kraft-Relaxation bei erhöhten Temperaturen, besteht ein Zielkonflikt. So werden als Materialien für derartige Federklammern in der Praxis bisher eingesetzt beispielsweise ein Stahl 51CrV4 mit einer Dacromet-Beschichtung (Dacromet ist ein Handelsname der Firma Dacral in Frankreich) als bei diesem Material notwendigen Korrosionsschutzschicht oder der Stahl X39CrMo17-1 in blanker Oberflächenausführung. Dabei werden die mit einer Korrosionsschutzschicht versehenen Federklammern aus dem Stahl 51CrV4 in motorfernen Abgasrohrbereichen bei entsprechend niedrigen Beanspruchungstemperaturen und der blanke Stahl motornah bei hohen Temperaturen eingesetzt, auf die sich die erfindungsgemäße Verbindungseinrichtung bezieht. Der Stahl X39CrMo17-1 ist jedoch spannungsrisskorrosionsempfindlich, so dass eine schnelle oder überraschende Totalschädigung des Bauteils teilweise nicht ausgeschlossen werden kann.

In der nachstehenden Tabelle ist ein Vergleich der Eigenschaften bisher für gattungsgemäße Bauteile einsetzbarer Werkstoffe angegeben.

| Werkstoff | 51CrV4 | X39CrMo17-1/ 48CrMoV6-7 | X7CrNiAl17-7 |
|---|---|---|---|
| | | | |
| Warmfestigkeit | • | •••• | ••••• |
| | | | |
| Korrosionsbeständigkeit | • | •• | ••••• |
| | | | |
| Kosten | ••••• | •••• | • |
| Verhalten: ••••• = gut • = schlecht | | | |

Wie bereits eingangs dargelegt, kann eine Korrosionsbeständigkeit von gattungsgemäßen Verbindungselementen, insbesondere Federklammern, mit einer Beschichtung erlangt werden. Von den bisher bekannten Möglichkeiten scheiden für Federelemente zunächst diejenigen aus, die zu einer Wasserstoffversprödung des Werkstücks führen könnten, da die Feder durch Sprödbruch versagen kann. Dies sind alle Arten einer Verzinkung, die galvanisch aufgebracht werden. Ferner weisen einige Beschichtungen die Eigenschaft auf, dass sie bei erhöhter Einsatztemperatur geschädigt werden und in ihrer Korrosionsschutzwirkung nachlassen wie beispielsweise Dacromet bei Temperaturen oberhalb 300° C sowie Verzinkung. Eine Beschichtung, die wiederum eine gute Temperaturbeständigkeit hat, wäre Vernickeln. Dieses Verfahren ist jedoch sehr kostenintensiv, birgt die Gefahr der Wasserstoffversprödung in sich und kann bei Verletzung der Beschichtung Kontaktkorrosion provozieren.

Bei Zylinderkopfschrauben von Verbrennungsmotoren sind nitrierte Unterlegscheiben aus GB 592,945 bekannt. Das Nitrieren dieser Unterlegscheiben verfolgt bei Gastemperaturen von 475 bis 550° C über einen Zeitraum von etwa 10 bis 24 Stunden. Temperaturen in dieser Größenordnung und relativ lange Behandlungszeiten sind generell zur Erzielung derartiger Nitrid-Schichten notwendig und üblich. Solche Beschichtungsverfahren führen bei Federklammern aus einem niedrig legierten Edelstahl, der zur Erzielung der notwendigen Festigkeit gehärtet und danach bei einer Temperatur zwischen 350 und 360° C über 2 Stunden angelassen werden muss, zu einem unzulässig hohen Festigkeitsverlust. Dieser Festigkeitsverlust tritt dadurch ein, dass die Nitriertemperatur erheblich über der nachfolgenden Anlasstemperatur liegt. Derartige hohe Behandlungstemperaturen führen bekanntermaßen bei gehärteten Federstählen zu einer Festigkeitsabsenkung. Ein solcher unter anderem auch in dem vorgenannten Dokument GB 592,945 grundsätzlich angegebener Festigkeitsverlust ist bei Federklammern, die nach der Erfindung Dauertemperaturen von über 400° ausgesetzt sind, nicht akzeptabel. Die nach GB 592,945 nitrierten Unterlegenscheiben sind in der Regel keiner mechanischen Zug-Druck-Wechselbeanspruchung unterworfen und 'weisen in Relation zu ihrer üblicherweise geringen. Dicke ein relative große Schichtdicke von 127 bis 254 µm auf. Bei den Unterlegscheiben nach GB 592,945 dienen die Nitridschichten nicht als Korrosionsschutz. Durch relativ dicke Nitridschichten sollen jene Unterlegscheiben eine gute Temperaturbeständigkeit aufweisen. Bei diesen Unterlegescheiben können bei hohen Temperaturen auftretende Setzverluste in einem gewissen Grade nicht nur ohne weiteres in Kauf genommen werden, sondern sie sind sogar in einem bestimmten Maße erwünscht, um bei einer auf.einer solchen Unterlegscheibe angezogenen Schraube ein Höchstmaß an Sicherungskraft zu erzeugen. Voraussetzung für eine solche hohe Sicherungskraft ist allerdings ein lediglich einmaliges Überdehnen, wie es bei einer für ein lediglich einmaliges Anziehen einer Schraube ausgelegten Unterlegscheibe anwendungsgemäß sichergestellt ist. Ein solches "Überdehnen" ist bei einer gattungsgemäßen Federklammer nicht zulässig. Insbesondere muss eine solche Federklammer bei der Montage weit über ihre Betriebs-Spannweite hinaus im noch elastischen Bereich aufgespreizt werden können, ohne dass hierdurch ein die Betriebsspannkraft erniedrigender Setzeffekt eintreten darf.

Aus WIEDERHOLT W.: "CHEMISCHE OBERFLÄCHENBEHANDLUNG VON METALLEN ZUM"1963, EUGEN G. LEUZE, SALGAU (WÜRTT), XP002254646, Seite 66, Zeile 1 - Seite 68, Zeile 14; Seite 71, Zeile 30 - Seite 73, Zeile 18 sind Nitridschichten auf Stahl bekannt. Durch diese soll die Härte, die Dauerwechselund Verschleißfestigkeit einer Stahloberfläche wesentlich und deren Korrosionsbeständigkeit gegen Wasser, Luft, Dampf-Gemische und dergleichen ebenfalls etwas erhöht werden.

Bei den gattungsgemäßen Federklammern, die in den eingangs genannten Dokumenten EP 0 993 577 B1 und DE 100 150 28 C1 beschrieben sind, ist lediglich angegeben; dass diese aus Federstahl bestehen können. Soweit diese Federklammern in der Praxis bereits eingesetzt worden sind, bestanden sie bei einem motorfernen, das heißt Niedrigtemperatur beanspruchten Einsatz aus einem niedrig legierten Federstahl mit einer Dacromet-Beschichtung oder einem hochlegierten Stahl mit blanker, das heißt unbeschichteter Oberfläche.

Die Erfindung beschäftigt sich mit dem Problem bei einer gattungsgemäßen Verbindungseinrichtung zweier heißer Rohrflansche eine dauerfeste und korrosionsbeständige Federklammer kostengünstig bereitstellen zu können.

Gelöst wird dieses Problem durch eine Ausführung dieser Verbindungsvorrichtung in einer Kombination mit sämtlichen Merkmalen des Patentanspruchs 1.

Zweckmäßige und vorteilhafte Ausgestaltungen sind Gegenstand der Unteransprüche.

Die Erfindung beruht auf dem allgemeinen Gedanken, eine Federklammer aus einem niedrig legierten Federstahl einzusetzen, dessen Festigkeit bei Temperaturen von 400 bis 500° C, wie sie in den Kontaktbereichen zwischen federklammer und Abgasanlage bei einer erfindungsgemäß motornahen Anordnung vorliegen, an sich nicht ausreichend sein kann, durch auf den erfindungsgemäßen Anwendungsfall speziell ausgerichtete Spezialmaßnahmen dennoch funktionsfähig einsetzen zu können. Dabei wird in einem ersten Schritt erkannt, dass die hohen Temperaturen lediglich in den Kontaktbereichen und nicht in dem Rückenbereich der Federklammer existieren, in dem die höchste Festigkeitsbeanspruchung herrscht. Die Betriebstemperaturen liegen im Rückenbereich der Federklammer lediglich bei etwa 250° C, das heißt in einem Bereich, in dem ein niedrig legierter und damit kostengünstiger 51CrV4-Stahl festigkeitsmäßig gerade noch' ausreichend sicher eingesetzt werden kann. Eine zweite erfindungsgemäße Überlegung besteht darin, einen Korrosionsschutz zu finden, der ebenfalls einerseits kostengünstig erzeugbar und andererseits auch in dem Hochtemperaturbereich an den Kontaktstellen betriebssicher ist. Dabei darf das Erzeugen des Korrosionsschutzes nicht durch beispielsweise hohe Behandlungstemperaturen die Festigkeit der Federklammer herabsetzen.

Die erfindungsgemäße Lösung führt unter einer pragmatischen Berücksichtigung all dieser Aspekte zu einer überraschend günstigen und betriebssicheren Lösung. Besonders wichtig für die erfindungsgemäße Lösung ist es, lediglich eine äußerst geringe Nitridschicht bei einer entsprechend niedrigen Nitrierbehandlungszeit zu erzeugen, um nicht durch lange Nitrierbehandlungszeiten bei über der Anlasstemperatur des gehärteten Federstahles liegenden Nitrierbehandlungstemperaturen die nach dem Härten des Federstahles erzielte Festigkeit unzulässig weit zu erniedrigen. Das Nitrieren und/oder Nitrocarborieren kann in einem Salzbad- oder Gasverfahren erfolgen und jeweils mit einer Nachoxidationsbehandlung.

Ein Ausführungsbeispiel für ein erfindungsgemäßes, federndes Bauteil in der Form einer U-förmigen Federklammer ist in der Zeichnung dargestellt.

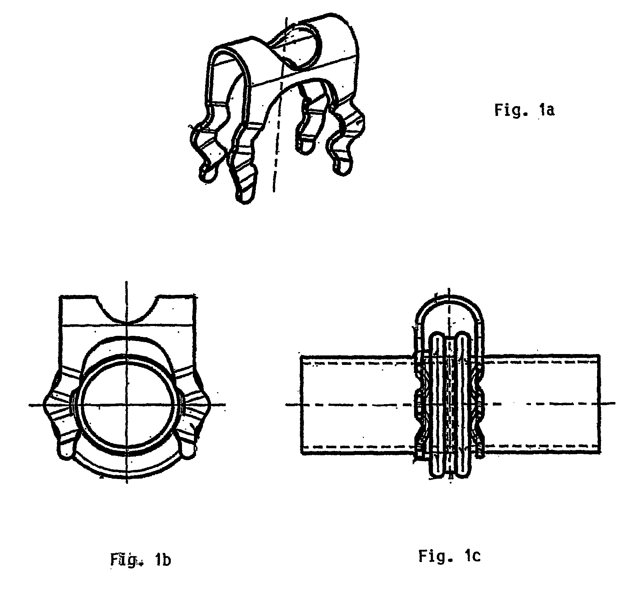

In dieser zeigt die einzige
- Fig. 1a,b,c,: eine gattungsgemäße Federklammer in verschiedenen perspektivischen Darstellungen einschließlich Betriebszustand bei einer Verbindung zweier Abgasrohrbereiche über aneinander liegende Rohrflanschen.

Das Grundmaterial'der gezeigten U-förmigen Federklammer besteht aus 51CrV4 (EN 10 132-4).

Zur Erzeugung des erfindungsgemäßen Oberflächenkorrosionsschutzes wird die aus dem vorstehenden Grundmaterial bestehende und fertig geformte Federklammer wie folgt behandelt.

Der Rohrflansch-Temperaturbereich, dem der Rücken der U-förmigen Federklammer ausgesetzt ist, reicht bis etwa 250° C, während die Temperaturen an den Schenkelkontaktflächen bei etwa 400 - 500° C liegen können.

### Korrosionsschutz nach Anspruch 1 (nitriert und/oder nitrocarboriert)

Es erfolgt eine Salzbad-Behandlung bei 540 bis 580° C bei 0,5 bis 1 h; alternativ Gas- oder Plasma-Nitrocarborieren bei geeigneten Parametern.

Eine derart erzielte Randzone besitzt beispielsweise folgende Zusammensetzung:
ε-Fe₂(N,C)1-x; γ'-Fe₄(N,C), Sondernitride Diffusionsschicht:
   α'' -Fe₁₆N₂; γ'-Fe₄N, Sondernitride, N und C in gelöster Form.

## Patentansprüche

1. (a) Verbindungsvorrichtung zweier heißer Rohrflansche von Abgasrohren eines Verbrennungsmotors mit einer die Rohrflansche zwischen sich einspannenden, U-förmig ausgebildeten Federklammer aus Federstahl, bei der
(b) die U-Schenkel der Federklammer die miteinander zu verbindenden heißen Abgasrohr-Flansche in lediglich eng begrenzten Bereichen kontaktieren,
(c) die Temperaturen in den Kontaktbereichen der Federklammer bei 400° C bis 500° C und diejenigen im Rückenbereich der Federklammer bei lediglich bis zu 250° C liegen,
(d) der Federstahl der Federklammer als niedrig legierter Edelstahl 51CrV4 (EN 10132-4) ausgebildet ist,
(e) die Oberfläche der Federklammer aus einer in einem Salzbad- oder Gasverfahren in einer Randzone zwischen 5 und 50 µm durch Nitrieren und/oder Nitrocarborieren erzeugten Korrosionsschicht besteht.

2. Verbindungsvorrichtung.nach Anspruch 1,
**dadurch gekennzeichnet,**
**dass** die Federklammer oxidativ nachbehandelt ist.

3. Verbindungsvorrichtung nach Anspruch 1 oder 2,
**gekennzeichnet durch,**
einen in die behandelte Oberfläche-Randzone der Federklammer eingebrachten, erhöhten Stickstoffgehalt mit einem Konzentrationsgradienten gegenüber dem Grundmaterial.

4. Verbindungsvorrichtung nach Anspruch 3,
**gekennzeichnet durch,**
einen in die behandelte Oberfläche-Randzone der Federklammer eingebrachten erhöhten Kohlenstoffgehalt mit einem Konzentrationsgradienten gegenüber dem Grundmaterial.

## Claims

1. (a) A connecting device of two hot pipe flanges of exhaust pipes of an internal combustion engines, comprising a spring clamp made of spring steel, which is constructed as U-shaped and clamps the pipe flanges between itself, wherein
(b) the U-legs of the spring clamp contact the hot exhaust pipe flanges to be joined together only in narrowly delimited areas,
(c) the temperatures in the contact areas of the spring clamps are 400 °C to 500 °C and those in the back area of the spring clamp are merely up to 250 °C,
(d) the spring steel of the spring clamps is constructed as low-alloyed stainless steel 51CrV4 (EN 10132-4),
(e) the surface of the spring clamp consists of a corrosion layer produced in a salt-bath or gas method by nitriding and/or nitrocarbiding in an edge zone between 5 and 50 µm.

2. The connecting device according to claim 1, **characterised in that** the spring clamp receives oxidative after-treatment.

3. The connecting device according to claim 1 or 2, **characterised by** an elevated nitrogen content incorporated in the treated surface edge zone of the spring clamp with a concentration gradient compared with the base material.

4. The connecting device according to claim 3, **characterised by** an elevated carbon content incorporated in the treated surface edge zone of the spring clamp with a concentration gradient compared with the base material.

## Revendications

1. (a) Dispositif de raccordement de deux brides chaudes des tuyaux d'échappement d'un moteur à combustion interne, présentant une pince à ressort réalisée en forme de U, en acier à ressort, et enserrant les brides de tuyaux, dans lequel
(b) les branches en U des pinces à ressort sont en contact avec les brides de tuyaux d'échappement à raccorder seulement dans des zones étroitement délimitées,
(c) les températures, dans les zones de contact des pinces à ressort, vont de 400 °C à 500 °C et celles de la zone arrière des pinces à ressort ne vont que jusqu'à 250 °C,
(d) l'acier à ressort des pinces à ressort est constitué par un acier faiblement allié 51CrV4 (EN 10132-4),
(e) la surface des pinces à ressort est composée d'une couche de corrosion créée par nitruration et/ou nitrocarboration dans une zone périphérique allant de 5 à 50 µm suivant un procédé au bain salin ou au gaz.

2. Dispositif de raccordement selon la revendication 1,
**caractérisé en ce que**
les pinces à ressort sont retraitées par oxydation.

3. Dispositif de raccordement selon la revendication 1 ou 2,
**caractérisé par**
un contenu d'azote accru intégré dans la zone périphérique de surface traitée des pinces à ressort avec un gradient de concentration par rapport au matériau de base.

4. Dispositif de raccordement selon la revendication 3,
**caractérisé par**
un contenu de carbone accru intégré dans la zone périphérique de surface traitée des pinces à ressort avec un gradient de concentration par rapport au matériau de base.
